# EUROPEAN PATENT SPECIFICATION

(11) **EP 3 035 646 B1**
(45) Date of publication and mention of the grant of the patent: **21.03.2018**
(21) Application number: 15199704.6
(22) Date of filing: 14.12.2015
(51) Int. Cl.: H04L 29/08, H04W 4/00, H04L 29/06, H04L 29/12

(54) **METHOD AND DEVICE FOR STARTING APPLICATION**
VERFAHREN UND VORRICHTUNG ZUM STARTEN EINER ANWENDUNG
PROCÉDÉ ET DISPOSITIF DE DÉMARRAGE D'APPLICATION

(30) Priority: 15.12.2014 CN 201410778277
(43) Date of publication of application: 22.06.2016
(73) Proprietor: Xiaomi Inc., Beijing 100085 (CN)
(72) Inventor: LIU, Tiejun, 100085 Beijing (CN); LI, Zheng, 100085 Beijing (CN); CHENG, Liang, 100085 Beijing (CN); ZHANG, Pengfei, 100085 Beijing (CN)
(74) Representative: Fontenelle, Sandrine

(56) References cited:
- WO-A2-2008/127905
- US-A1- 2013 012 179
- ALEXANDER SILICON GRAPHICS S ET AL: "DHCP Options and BOOTP Vendor Extensions; rfc2132.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 March 1997 (1997-03-01), XP015007916, ISSN: 0000-0003

## Description

### TECHNICAL FIELD

The present invention relates to the field of computer technology and, more particularly, to a method and a device for starting an application.

### BACKGROUND

Routers are installed therein with applications based on protocols. Such applications include applications based on protocols defined by standards and applications based on private (i.e. proprietary) protocols. Each type of applications provides service for a terminal supporting the corresponding protocol.

Conventionally, after the router starts, the router will automatically start all the applications based on protocols defined by standards and applications based on private protocols, such that after a connection with a terminal is established, the router may determine the protocol supported by the terminal, and provide service for the terminal by using the application corresponding to this protocol. The memory of a router is usually limited; starting and operating the application based on the private protocol will waste a majority of memory of the router.

Document US 2013/012179 A1 discloses a system and method for configuring communications between a wireless device and a vehicle telematics unit over a short-range wireless communication link.

Document WO 2008/127905 A2 discloses a method for launching an application of an electronic device using a wireless communication network.

Document "DHCP Options and BOOTP Vendor Extensions; rfc2132.txt" discloses configuration parameters and other control information carried in tagged data items that are stored in the "options" field of the DHCP message.

### SUMMARY

In order to solve the problem of wasting massive memory of a router due to operating an application based on a private protocol when no connection between the router and a terminal supporting the private protocol is established, the present invention provides a method and a device for starting an application.

According to a first aspect of embodiments of the present invention, there is provided a method for starting an application, as recited in claim 1.

In one embodiment, the method further includes:
if the terminal is disconnected with a router, detecting whether there is other terminal supporting the private protocol being in a connection state with the router; and
closing the application based on the private protocol if detecting that no other terminal supporting the private protocol is in the connection state with the router.

According to the invention, detecting whether the terminal supports the private protocol includes:
reading a host name of the terminal from a Dynamic Host Configuration Protocol (DHCP) configuration file, the host name being acquired and added in the DHCP configuration file when a router establishes a connection with the terminal;
detecting whether a preset name list includes a host type matched with the host name, the name list being for storing host types of terminals supporting the private protocol; and
determining that the terminal supports the private protocol if the name list includes the host type matched with the host name.

In one embodiment, if there are at least two name lists and each name list corresponds to at least one application based on the private protocol, starting the application based on the private protocol includes:
determining a name list to which the matched host type belongs; and
determining and starting at least one application based on the private protocol corresponding to this name list.

In one embodiment, the method further includes:
deleting the host name of the terminal from the DHCP configuration file if the terminal is disconnected with the router.

According to a second aspect of embodiments of the present invention, there is provided a device for starting an application, as recited in claim 5.

In one embodiment, the device further includes:
a second detection module configured to, if the terminal is disconnected with a router, detect whether there is other terminal supporting the private protocol being in a connection state with the router; and
an application closing module configured to close the application based on the private protocol if the second detection module detects that no other terminal supporting the private protocol is in the connection state with the router.

According to the invention, the first detection module includes:
a name reading submodule configured to read a host name of the terminal from a Dynamic Host Configuration Protocol DHCP configuration file, the host name being acquired and added in the DHCP configuration file when a router establishes a connection with the terminal;
a name detecting submodule configured to detect whether a preset name list includes a host type matched with the host name read by the name reading submodule, the name list being for storing host types of terminals supporting the private protocol; and
a result determining submodule configured to determine that the terminal supports the private protocol if the name list includes the host type matched with the host name.

In one embodiment, if there are at least two name lists and each name list corresponds to at least one application based on the private protocol, the application starting module includes:
a list determining submodule configured to determine a name list to which the matched host type belongs; and
an application starting submodule configured to determine and start at least one application based on the private protocol corresponding to the name list determined by the list determining submodule.

In one embodiment, the device further includes:
a name deleting module configured to delete the host name of the terminal from the DHCP configuration file if the terminal is disconnected with the router.

According to a third aspect of embodiments of the present invention, there is provided a device for starting an application, including:
a processor; and
a memory for storing instructions executable by the processor;
wherein the processor is configured to:
establish a connection with a terminal;
detect whether the terminal supports a private protocol; and
start an application based on the private protocol if detecting that the terminal supports the private protocol.

The present invention also provides a computer program, which when executing on a processor of a router, performs the above mentioned method.

The technical solutions provided by the embodiments of the present invention may include the following advantageous effects.

Through establishing a connection with a terminal; detecting whether the terminal supports a private protocol; and if detecting that the terminal supports the private protocol, starting an application based on the private protocol, the problem of wasting massive memory of the router due to operating the application based on the private protocol when no connection between the router and the terminal supporting the private protocol is established is solved, and the effect of saving memory of the router is achieved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for starting an application, according to an exemplary embodiment.
Fig. 2 is a flow chart of a method for starting an application, according to another exemplary embodiment.
Fig. 3 is a block diagram of a device for starting an application, according to an exemplary embodiment.
Fig. 4 is a block diagram of a device for starting an application, according to another exemplary embodiment.
Fig. 5 is a block diagram of a device for starting an application, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

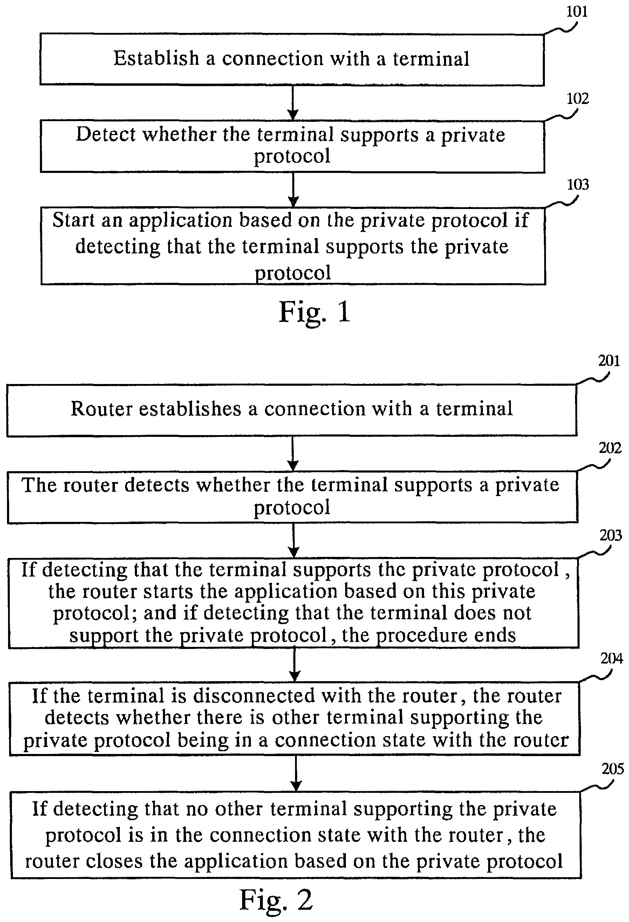

Fig. 1 is a flow chart of a method for starting an application, according to an exemplary embodiment. As shown in Fig. 1, the method for starting an application may be applied in a router, including the following steps.

In step 101, a connection with a terminal is established.

In step 102, whether the terminal supports a private protocol is detected.

In step 103, if detecting that the terminal supports the private protocol, an application based on the private protocol is started.

From above, in the method for starting an application provided by the present invention, a connection with a terminal is established; whether the terminal supports a private protocol is detected; and if detecting that the terminal supports the private protocol, an application based on the private protocol is started. In this way, the application based on the private protocol can be started only after the connection with the terminal supporting the private protocol is established, which solves the problem of wasting massive memory of the router due to operating the application based on the private protocol when no connection between the router and the terminal supporting the private protocol is established. The invention thus achieves the effect of saving memory of the router.

Fig. 2 is a flow chart of a method for starting an application, according to another exemplary embodiment. As shown in Fig. 2, the method for starting an application includes the following steps.

In step 201, a connection between a router and a terminal is established.

The terminal may be an electronic apparatus supporting protocols defined by standards, or may be an electronic apparatus supporting protocols defined by standards and private (i.e. proprietary) protocols, wherein the protocols defined by standards are widely used protocols, such as SMB (Server Messages Block) protocol or DLNA (Digital Living Network Alliance) protocol. The terminal supporting the protocols defined by the standards may be a personal computer, a TV, a Network Set-Top Box, and the like. The private protocols are protocols which are used in a local range. For example, xx router manufacturer and xx TV manufacturer cooperate and develop a private protocol, such private protocol is only used between the xx router and the xx TV, and the xx TV is a terminal supporting the protocol defined by a standard and the private protocol.

After starting the router, the router receives a connection establishing request sent by the terminal. Then the router assigns an IP (Internet Protocol) address for the terminal by DHCP (Dynamic Host Configuration Protocol), and sends the IP address to the terminal, so as to complete the procedure of establishing the connection with the terminal.

Usually, the terminal which establishes a connection with the router calls the application based on a protocol defined by a standard, thereby after the router is started, the router will also start the application based on the protocol defined by the standard, such that the application based on the protocol defined by the standard may directly provide service for the accessed terminal. When the protocol defined by the standard is a SMB protocol, the application based on the protocol defined by the standard may be for example a samba application; and when the protocol defined by the standard is a DLNA protocol, the application based on the protocol defined by the standard may be a DLNA application.

In step 202, the router detects whether the terminal supports a private protocol.

The memory of the router is limited. If the router does not establish a connection with a terminal supporting the private protocol, then starting and operating the application based on the private protocol will waste a majority of memory of the router. Thereby, the router may not start the application based on the private protocol at first, and start the application based on the private protocol only after establishing a connection with a terminal supporting the private protocol, so as to accelerate a starting speed of the router, and save the memory. The application based on the private protocol may be mediaservice and the like.

In the embodiment, after a connection is established between the router and the terminal, the router also needs to detect whether the terminal supports a private protocol. Detecting whether the terminal supports the private protocol includes:
1) reading a host name of the terminal from a DHCP configuration file, the host name being acquired and added in the DHCP configuration file when the router establishes a connection with the terminal;
2) detecting whether a preset name list includes a host type matched with the host name, the name list being for storing host types of terminals supporting the private protocol;
3) if the name list includes the host type matched with the host name, determining that the terminal supports the private protocol.

When establishing a connection with the terminal, the router will read the host name of the terminal, and add the host name into information of the terminal in the DHCP configuration file. Thereby, the router may determine the terminal with which a connection is established according to the DHCP configuration file.

For instance, the DHCP configuration file is /tmp/dhcp.leases file, and it is assumed that the following information of the terminal is saved in this file:
43200 10:48:b1:2c:28:41 192.168.31.149 MiTV2-242bdb61b8e78f35 *
43200 98:3b:16:a4:e3:5d 192.168.31.223 MiBOX2-cd777958149c13cd *
43200 8c:be:be:70:02:69 192.168.31.217 MI3W-xiaomishoujiltj *

Through analysis, the host name of the first terminal is MiTV2-242bdb61b8e78f35, the host name of the second terminal is MiBOX2-cd777958149c13cd, and the third host name is MI3W-xiaomishoujiltj.

Also, the router may acquire the host names of the terminals supporting the private protocol in advance, and add these host names into the name list. At this time, the name list is used for storing the host names of the terminals supporting the private protocol. After acquiring the host name, the router detects whether the name list includes this host name. If the router detects that the name list includes this host name, it is determined that the terminal supports the private protocol; and if the router detects that the name list does not includes this host name, it is determined that the terminal does not support the private protocol.

For example, MiTV2-242bdb61b8e78f35 and MiBOX2-cd777958149c13cd are stored in the name list in the router, when the host name read from the DHCP configuration file by the router is MiTV2-242bdb61b8e78f35, it is detected that the name list includes the host name, and it is determined that the terminal supports the private protocol.

Generally, one private protocol may be supported by at least one type of terminals, and if the host names of all the terminals of a certain type are added into the name list, a majority of memory of the router will be occupied, and the detection efficiency will be relatively low. Since the host name includes a host type and a serial number, the router may extract the host type from the host name and add the host type into the name list. At this point, the name list is used for storing the host types of the terminals supporting the private protocol.

After reading the host name, the router exacts the host type of the terminal from the host name, and detects whether the host type exists in the name list. If the router detects that the host type exists in the name list, it is determined that the name list includes the host type matched with the host name, and the terminal supports the private protocol; and if the router detects that the host type does not exist in the name list, it is determined that the name list does not include the host type matched with the host name, and the terminal does not support the private protocol.

For example, MiTV2 and MiBOX2 are stored in the name list in the router, when the host name read from the DHCP configuration file by the router is MiTV2-242bdb61b8e78f35, the host type exacted from the host name is MiTV2, this host type exists in the name list, and it is determined that the terminal supports the private protocol.

In a particular embodiment, the router may read the host names from the DHCP configuration file every a predetermined time, and detect whether the terminal which is in a connection state with the router supports the private protocol according to the host name; or when receiving a connection event, the terminal reads the host name from the DHCP configuration file, and detects whether the terminal which is in a connection state with the router supports the private protocol according to the host name.

In step 203, if it is detected that the terminal supports the private protocol, the router starts the application based on this private protocol; and if it is detected that the terminal does not support the private protocol, the procedure ends.

When there is only one application based on the private protocol in the router, the router directly starts the application based on the private protocol. When there are at least two applications based on the private protocol, the router needs to determine the application based on the private protocol supported by the terminal, so as to avoid the problem of wasting memory due to operating the application based on other private protocol. In this embodiment, the procedure of determining the application based on the private protocol supported by the terminal is explained by using an example of establishing a corresponding relationship between the name list and the application based on the private protocol.

If there are at least two name lists and each name list corresponds to at least one application based on the private protocol, starting the application based on the private protocol includes:
1) determining a name list to which the host name belongs; and
2) determining and starting at least one application based on the private protocol corresponding to the name list.

After determining that the terminal supports the private protocol, the router may also determine the host type of the terminal, determine a name list including the host type according to the host type, and determine an application based on the private protocol supported by the terminal according to the name list and the corresponding relationship.

In step 204, if the terminal is disconnected with the router, the router detects whether there is other terminal supporting the private protocol being in a connection state with the router.

If the terminal is disconnected with the router, the router needs to detect whether there is other terminal supporting the private protocol being in a connection state with the router. If the router detects that there is no other terminal supporting the private protocol being in a connection state with the router, the router determines that continuing to operate the application shall waste the memory of the router, and closes the application based on the private protocol, i.e., performs step 205; and if the router detects that there is other terminal supporting the private protocol being in a connection state with the router, the router does not perform the operation to the application based on the private protocol.

The method for starting an application provided by this embodiment further includes: if the terminal is disconnected with the router, deleting the host name of the terminal from the DHCP configuration file.

Therefore, if there is a need to detect whether the terminal is disconnected with the router, the router may read the host names of all the terminals in the DHCP configuration file, determine the reduced host names compared with last reading operation, and determine the terminals indicated by respective reduced host names to be the terminals disconnected with the router.

When the terminal in step 204 is the terminal supporting the private protocol in step 203, step 204 is performed after step 203; and if the terminal in step 204 supports the private protocol and is not the terminal in step 203, the present embodiment does not restrict the performing sequences of step 204 and steps 201-203.

In step 205, when detecting that no other terminal supporting the private protocol is in a connection state with the router, the router closes the application based on the private protocol.

Step 202 to step 205 may be implemented as an application management script in the router, and after the router is started, the router automatically operates the application management script.

From above, in the method for starting an application provided by the present invention, a connection with a terminal is established; whether the terminal supports a private protocol is detected; and if detecting that the terminal supports the private protocol, an application based on the private protocol is started. In this way, the application based on the private protocol can be started only after the connection with the terminal supporting the private protocol is established, which solves the problem of wasting massive memory of the router due to operating the application based on the private protocol when no connection between the router and the terminal supporting the private protocol is established. The invention thus achieves the effect of saving memory of the router.

In addition, when the terminal is disconnected with the router, whether there is other terminal supporting the private protocol being in a connection state with the router is detected; and if detecting that there is no other terminal supporting the private protocol being in the connection state with the router, the application based on the private protocol is closed; in this way, the application based on the private protocol may be closed when the router does not establish a connection with the terminal supporting the private protocol, so as to further save the memory of the router.

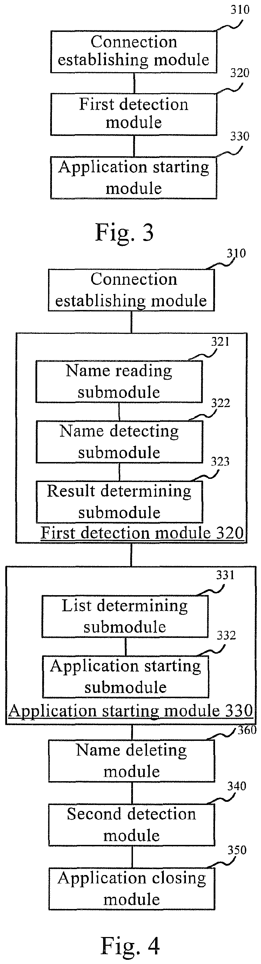

Fig. 3 is a block diagram of a device for starting an application, according to an exemplary embodiment. The device for starting an application is applied in a router. As shown in Fig. 3, the device for starting an application includes a connection establishing module 310, a first detection module 320 and an application starting module 330.

The connection establishing module 310 is configured to establish a connection with a terminal.

The first detection module 320 is configured to detect whether the terminal supports a private protocol.

The application starting module 330 is configured to start an application based on the private protocol if the first detection module 320 detects that the terminal supports the private protocol.

From above, in the device for starting an application provided by the present invention, a connection with a terminal is established; whether the terminal supports a private protocol is detected; and if detecting that the terminal supports the private protocol, an application based on the private protocol is started. In this way, the application based on the private protocol can be started only after the connection with the terminal supporting the private protocol is established, which solves the problem of wasting massive memory of the router due to operating the application based on the private protocol when no connection between the router and the terminal supporting the private protocol is established. The invention thus achieves the effect of saving memory of the router.

Fig. 4 is a block diagram of a device for starting an application, according to another exemplary embodiment. The device for starting an application is applied in a router. As shown in Fig. 4, the device for starting an application includes a connection establishing module 310, a first detection module 320 and an application starting module 330.

The connection establishing module 310 is configured to establish a connection with a terminal.

The first detection module 320 is configured to detect whether the terminal supports a private protocol.

The application starting module 330 is configured to start an application based on the private protocol if the first detection module 320 detects that the terminal supports the private protocol.

In one embodiment, the device for starting an application further includes: a second detection module 340 and an application closing module 350.

The second detection module 340 is configured to detect whether there is other terminal supporting the private protocol being in a connection state with a router if the terminal is disconnected with the router.

The application closing module 350 is configured to close the application based on the private protocol when the second detection module 340 detects that no other terminal supporting the private protocol is in the connection state with the router.

Optionally, the first detection module 320 includes: a name reading submodule 321, a name detecting submodule 322 and a result determining submodule 323.

The name reading submodule 321 is configured to read a host name of the terminal from a DHCP configuration file, the host name being acquired and added in the DHCP configuration file when the router establishes a connection with the terminal.

The name detecting submodule 322 is configured to detect whether a preset name list includes a host type matched with the host name read by the name reading submodule 321, the name list being for storing host types of terminals supporting the private protocol.

The result determining submodule 323 is configured to determine that the terminal supports the private protocol if the name list includes the host type matched with the host name.

In one embodiment, if there are at least two name lists and each name list corresponds to at least one application based on the private protocol, the application starting module 330 includes: a list determining submodule 331 and an application starting submodule 332.

The list determining submodule 331 is configured to determine a name list to which the matched host type belongs.

The application starting submodule 332 is configured to determine and start at least one application based on the private protocol corresponding to the name list determined by the list determining submodule 331.

In one embodiment, the device for starting an application provided by this embodiment further includes: a name deleting module 360.

The name deleting module 360 is configured to delete the host name of the terminal from the DHCP configuration file if the terminal is disconnected with the router.

From above, in the device for starting an application provided by the present invention, a connection with a terminal is established; whether the terminal supports a private protocol is detected; and if detecting that the terminal supports the private protocol, an application based on the private protocol is started. In this way, the application based on the private protocol can be started only after the connection with the terminal supporting the private protocol is established, which solves the problem of wasting massive memory of the router due to operating the application based on the private protocol when no connection between the router and the terminal supporting the private protocol is established. The invention thus achieves the effect of saving memory of the router.

In addition, when the terminal is disconnected with the router, whether there is other terminal supporting the private protocol being in a connection state with the router is detected; and if it is detected that there is no other terminal supporting the private protocol being in a connection state with the router, the application based on the private protocol is closed. In this way, the application based on the private protocol may be closed when the router does not establish a connection with the terminal supporting the private protocol, so as to further save the memory of the router.

With respect to the devices in the above embodiments, the specific manners for performing operations for individual modules therein have been described in detail in the embodiments regarding the methods, which will not be elaborated herein.

One exemplary embodiment of the present invention provides a device for starting an application which can implement the method for starting an application provided by the present invention. The device for starting an application includes a processor and a memory for storing instructions executable by the processor;
wherein the processor is configured to:
establish a connection with a terminal;
detect whether the terminal supports a private protocol; and
start an application based on the private protocol if detecting that the terminal supports the private protocol.

In one embodiment, the processor is further configured to:
detect whether there is other terminal supporting the private protocol being in a connection state with the router if the terminal is disconnected with the router; and
close the application based on the private protocol when detecting that no other terminal supporting the private protocol is in the connection state with the router.

In one embodiment, detecting whether the terminal supports the private protocol includes:
reading a host name of the terminal from a DHCP configuration file, the host name being acquired and added in the DHCP configuration file when the router establishes a connection with the terminal;
detecting whether a preset name list includes a host type matched with the host name, the name list being for storing host types of terminals supporting the private protocol; and
determining that the terminal supports the private protocol if the name list includes the host type matched with the host name.

In one embodiment, if there are at least two name lists and each name list corresponds to at least one application based on the private protocol, starting the application based on the private protocol includes:
determining a name list to which the matched host type belongs; and
determining and starting at least one application based on the private protocol corresponding to the name list.

In one embodiment, the processor is further configured to:
delete the host name of the terminal from the DHCP configuration file if the terminal is disconnected with the router.

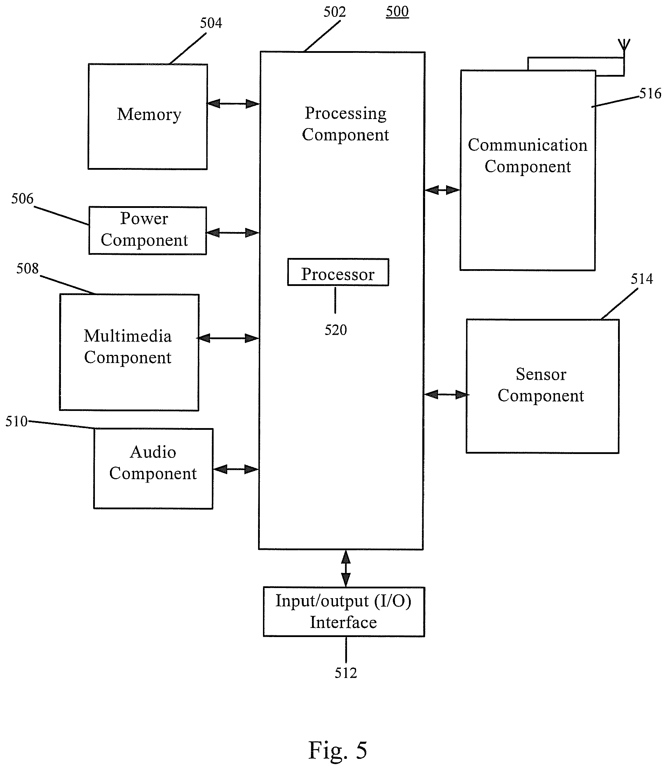

Fig. 5 is a block diagram of a device 500 for starting an application, according to an exemplary embodiment. For example, the device 500 may be a router, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for starting an application in a router, the method being suitable to be implemented by the router and comprising:
establishing (101, 201) a connection with a terminal;
detecting (102, 202) whether the terminal supports a private protocol; if detecting that the terminal supports the private protocol, starting (103, 203) an application based on the private protocol in the router;
wherein detecting (102, 202) whether the terminal supports the private protocol comprises:
reading a host name of the terminal from a Dynamic Host Configuration Protocol DHCP configuration file, the host name being acquired and added into the DHCP configuration file when a router establishes a connection with the terminal;
detecting whether a preset name list comprises a host type extracted from the host name, the name list being for storing host types of terminals supporting the private protocol; and
determining that the terminal supports the private protocol if the name list comprises the host type extracted from the host name.

2. The method according to claim 1, **characterized in that**, the method further comprises:
if the terminal is disconnected with the router, detecting (204) whether there is other terminal supporting the private protocol being in a connection state with the router; and
closing (205) the application based on the private protocol if detecting that no other terminal supporting the private protocol is in the connection state with the router.

3. The method according to claim 1 or 2, **characterized in that**, if there are at least two name lists and each name list corresponds to at least one application based on the private protocol, the starting (103, 203) the application based on the private protocol comprises:
determining a name list to which the extracted host type belongs; and
determining and starting at least one application based on the private protocol corresponding to this name list.

4. The method according to any of claims 1-3, **characterized in that**, the method further comprises:
deleting the host name of the terminal from the DHCP configuration file if the terminal is disconnected with the router.

5. A device for starting an application in a router, the device being suitable to be implemented in the router and comprising:
a connection establishing module (310) configured to establish a connection with a terminal;
a first detection module (320) configured to detect whether the terminal supports a private protocol;
an application starting module (330) configured to start an application based on the private protocol if the first detection module (320) detects that the terminal supports the private protocol in the router;
wherein the first detection module (320) comprises:
a name reading submodule (321) configured to read a host name of the terminal from a Dynamic Host Configuration Protocol DHCP configuration file, the host name being acquired and added in the DHCP configuration file when a router establishes a connection with the terminal;
a name detecting submodule (322) configured to detect whether a preset name list comprises a host type extracted from the host name read by the name reading submodule (321), the name list being for storing host types of terminals supporting the private protocol; and
a result determining submodule (323) configured to determine that the terminal supports the private protocol if the name list comprises the host type extracted from the host name.

6. The device according to claim 5, **characterized in that**, the device further comprises:
a second detection module (340) configured to, if the terminal is disconnected with the router, detect whether there is other terminal supporting the private protocol being in a connection state with the router; and
an application closing module (350) configured to close the application based on the private protocol if the second detection module (340) detects that no other terminal supporting the private protocol is in the connection state with the router.

7. The device according to claim 5 or 6, **characterized in that**, if there are at least two name lists and each name list corresponds to at least one application based on the private protocol, the application starting module (330) comprises:
a list determining submodule (331) configured to determine a name list to which the extracted host type belongs; and
an application starting submodule (332) configured to determine and start at least one application based on the private protocol corresponding to the name list determined by the list determining submodule (331).

8. The device according to any one of claims 5-7, **characterized in that**, the device further comprises:
a name deleting module (360) configured to delete the host name of the terminal from the DHCP configuration file if the terminal is disconnected with the router.

9. A computer program, which when executing on a processor of a router, performs a method according to any one of claims 1 to 4.

10. A non-transitory computer readable storage medium including instructions for performing a method according to any one of claims 1 to 4.

## Patentansprüche

1. Verfahren zum Starten einer Anwendung in einem Router, wobei das Verfahren zur Implementierung durch den Router geeignet ist und umfasst:
Herstellen (101, 201) einer Verbindung zu einem Endgerät,
Erkennen (102, 202), ob das Endgerät ein privates Protokoll unterstützt; wenn erkannt wird, dass das Endgerät das private Protokoll unterstützt, Starten (103, 203) einer Anwendung, die auf dem privaten Protokoll basiert, in dem Router,
wobei das Erkennen (102, 202), ob das Endgerät das private Protokoll unterstützt, umfasst:
Auslesen eines Hostnamens des Endgeräts aus einer Dynamic-Host-Configuration-Protocol-(DHCP)-Konfigurationsdatei, wobei der Hostname erfasst und der DHCP-Konfigurationsdatei hinzugefügt wird, wenn ein Router eine Verbindung mit dem Endgerät herstellt,
Erkennen, ob eine voreingestellte Namensliste einen Hosttyp, der aus dem Hostnamen extrahiert wird, umfasst, wobei die Namensliste zum Speichern von Hosttypen von Endgeräten dient, die das private Protokoll unterstützen, und
Bestimmen, dass das Endgerät das private Protokoll unterstützt, wenn die Namensliste den aus dem Hostnamen extrahierten Hosttyp umfasst.

2. Verfahren nach Anspruch 1, **dadurch gekennzeichnet, dass** das Verfahren ferner umfasst:
Erkennen (204), wenn das Endgerät von dem Router getrennt ist, ob sich ein anderes Endgerät, das das private Protokoll unterstützt, in einem Verbindungszustand mit dem Router befindet, und
Schließen (205) der Anwendung, die auf dem privaten Protokoll basiert, wenn erkannt wird, dass sich kein anderes Endgerät, das das private Protokoll unterstützt, in dem Verbindungszustand mit dem Router befindet.

3. Verfahren nach Anspruch 1 oder 2, **dadurch gekennzeichnet, dass**, wenn es mindestens zwei Namenslisten gibt und jede Namensliste mindestens einer Anwendung, die auf dem privaten Protokoll basiert, entspricht, das Starten (103, 203) der Anwendung, die auf dem privaten Protokoll basiert, umfasst:
Bestimmen einer Namensliste, welcher der extrahierte Hosttyp angehört, und
Bestimmen und Starten von mindestens einer Anwendung, die auf dem privaten Protokoll basiert, entsprechend dieser Namensliste.

4. Verfahren nach einem der Ansprüche 1 - 3, **dadurch gekennzeichnet, dass** das Verfahren ferner umfasst:
Löschen des Hostnamens des Endgeräts aus der DHCP-Konfigurationsdatei, wenn das Endgerät von dem Router getrennt ist.

5. Vorrichtung zum Starten einer Anwendung in einem Router, wobei die Vorrichtung zur Implementierung in dem Router geeignet ist und umfasst:
ein Verbindungsherstellungsmodul (310), das konfiguriert ist, eine Verbindung mit einem Endgerät herzustellen,
ein erstes Erkennungsmodul (320), das konfiguriert ist zu erkennen, ob das Endgerät ein privates Protokoll unterstützt,
ein Anwendungsstartmodul (330), das konfiguriert ist, eine Anwendung, die auf dem privaten Protokoll basiert, zu starten, wenn das erste Erkennungsmodul (320) erkennt, dass das Endgerät das private Protokoll in dem Router unterstützt,
wobei das erste Erkennungsmodul (320) umfasst:
ein Namenausieseuntermodul (321), das konfiguriert ist, einen Hostnamen des Endgeräts aus einer Dynamic-Host-Configuration-Protocol-(DHCP)-Konfigurationsdatei auszulesen, wobei der Hostname erfasst und der DHCP-Konfigurationsdatei hinzugefügt wird, wenn ein Router eine Verbindung mit dem Endgerät herstellt,
ein Namenerkennungsuntermodul (322), das konfiguriert ist zu erkennen, ob eine voreingestellte Namensliste einen Hosttyp, der aus dem durch das Namenausleseuntermodul (321) ausgelesenen Hostnamen extrahiert wird, umfasst, wobei die Namensliste zum Speichern von Hosttypen von Endgeräten dient, die das private Protokoll unterstützen, und
ein Ergebnisbestimmungsuntermodul (323), das konfiguriert ist zu bestimmen, dass das Endgerät das private Protokoll unterstützt, wenn die Namensliste den aus dem Hostnamen extrahierten Hosttyp umfasst.

6. Vorrichtung nach Anspruch 5, **dadurch gekennzeichnet, dass** die Vorrichtung ferner umfasst:
ein zweites Erkennungsmodul (340), das konfiguriert ist, wenn das Endgerät von dem Router getrennt ist, zu erkennen, ob sich ein anderes Endgerät, das das private Protokoll unterstützt, in einem Verbindungszustand mit dem Router befindet, und
ein Anwendungsschließmodul (350), das konfiguriert ist, die Anwendung, die auf dem privaten Protokoll basiert, zu schließen, wenn das zweite Erkennungsmodul (340) erkennt, dass sich kein anderes Endgerät, das das private Protokoll in dem Router unterstützt, in dem Verbindungszustand mit dem Router befindet.

7. Vorrichtung nach Anspruch 5 oder 6, **dadurch gekennzeichnet, dass**, wenn es mindestens zwei Namenslisten gibt und jede Namensliste mindestens einer Anwendung, die auf dem privaten Protokoll basiert, entspricht, das Anwendungsstartmodul (330) umfasst:
ein Listenbestimmungsuntermodul (331), das konfiguriert ist, eine Namensliste zu bestimmen, welcher der extrahierte Hosttyp angehört, und
ein Anwendungsstartuntermodul (332), das konfiguriert ist, mindestens eine Anwendung, die auf dem privaten Protokoll basiert, entsprechend der Namensliste, die durch las Listenbestimmungsuntermodul (331) bestimmt wird, zu bestimmen und zu starten.

8. Vorrichtung nach einem der Ansprüche 5 - 7, **dadurch gekennzeichnet, dass** die Vorrichtung ferner umfasst:
ein Namenlöschmodul (360), das konfiguriert ist, den Hostnamen des Endgeräts aus der DHCP-Konfigurationsdatei zu löschen, wenn das Endgerät von dem Router getrennt ist.

9. Computerprogramm, das bei Ausführung auf einem Prozessor eines Routers ein Verfahren nach einem der Ansprüche 1 bis 4 durchführt.

10. Nichtflüchtiges computerlesbares Speichermedium, das Anweisungen zur Durchführung eines Verfahrens nach einem der Ansprüche 1 bis 4 beinhaltet.

## Revendications

1. Procédé pour démarrer une application dans un routeur, le procédé étant approprié pour être mis en oeuvre par le routeur et comprenant :
l'établissement (101, 201) d'une connexion avec un terminal ;
la détection (102, 202) de si le terminal supporte un protocole privé ; s'il est détecté que le terminal supporte le protocole privé, le démarrage (103, 203) d'une application basée sur le protocole privé dans le routeur ;
dans lequel la détection (102, 202) de si le terminal supporte le protocole privé comprend :
la lecture d'un nom d'hôte du terminal à partir d'un fichier de configuration de Protocole de configuration dynamique des hôtes DHCP, le nom d'hôte étant acquis et ajouté dans le fichier de configuration DHCP lorsqu'un routeur établit une connexion avec le terminal ;
la détection de si une liste de noms prédéfinie comprend un type d'hôte extrait du nom d'hôte, la liste de noms étant destinée à stocker des types d'hôte de terminaux supportant le protocole privé ; et
la détermination que le terminal supporte le protocole privé si la liste de noms comprend le type d'hôte extrait du nom d'hôte.

2. Procédé selon la revendication 1, **caractérisé en ce que**, le procédé comprend en outre :
si le terminal est déconnecté du routeur, la détection (204) de s'il y a un autre terminal supportant le protocole privé qui est dans un état de connexion avec le routeur ; et
la fermeture (205) de l'application basée sur le protocole privé s'il est détecté qu'aucun autre terminal supportant le protocole privé n'est dans l'état de connexion avec le routeur.

3. Procédé selon la revendication 1 ou 2, **caractérisé en ce que**, s'il y a au moins deux listes de noms et que chaque liste de noms correspond à au moins une application basée sur le protocole privé, le démarrage (103, 203) de l'application basée sur le protocole privé comprend :
la détermination d'une liste de noms à laquelle appartient le type d'hôte extrait ; et
la détermination et le démarrage d'au moins une application basée sur le protocole privé correspondant à cette liste de noms.

4. Procédé selon l'une quelconque des revendications 1 à 3, **caractérisé en ce que**, le procédé comprend en outre :
la suppression du nom d'hôte du terminal du fichier de configuration DHCP si le terminal est déconnecté du routeur.

5. Dispositif pour démarrer une application dans un routeur, le dispositif étant approprié pour être mis en oeuvre dans le routeur et comprenant :
un module d'établissement de connexion (310) configuré pour établir une connexion avec un terminal ;
un premier module de détection (320) configuré pour détecter si le terminal supporte un protocole privé ;
un module de démarrage d'application (330) configuré pour démarrer une application basée sur le protocole privé si le premier module de détection (320) détecte que le terminal supporte le protocole privé dans le routeur ;
dans lequel le premier module de détection (320) comprend :
un sous-module de lecture de nom (321) configuré pour lire un nom d'hôte du terminal à partir d'un fichier de Protocole de configuration dynamique des hôtes DHCP, le nom d'hôte étant acquis et ajouté dans le fichier de configuration DHCP lorsqu'un routeur établit une connexion avec le terminal ;
un sous-module de détection de nom (322) configuré pour détecter si une liste de noms prédéfinie comprend un type d'hôte extrait du nom d'hôte lu par le sous-module de lecture de nom (321), la liste de noms étant destinée à stocker des types d'hôte de terminaux supportant le protocole privé ; et
un sous-module de détermination de résultat (323) configuré pour déterminer que le terminal supporte le protocole privé si la liste de noms comprend le type d'hôte extrait du nom d'hôte.

6. Dispositif selon la revendication 5, **caractérisé en ce que**, le dispositif comprend en outre :
un second module de détection (340) configuré pour, si le terminal est déconnecté du routeur, détecter s'il y a un autre terminal supportant le protocole privé qui est dans un état de connexion avec le routeur ; et
un module de fermeture d'application (350) configuré pour fermer l'application basée sur le protocole privé si le second module de détection (340) détecte qu'aucun autre terminal supportant le protocole privé n'est dans l'état de connexion avec le routeur.

7. Dispositif selon la revendication 5 ou 6, **caractérisé en ce que**, s'il y a au moins deux listes de noms et que chaque liste de noms correspond à au moins une application basée sur le protocole privé, le module de démarrage d'application (330) comprend :
un sous-module de détermination de liste (331) configuré pour déterminer une liste de noms à laquelle appartient le type d'hôte extrait ; et
un sous-module de démarrage d'application (332) configuré pour déterminer et démarrer au moins une application basée sur le protocole privé correspondant à la liste de noms déterminée par le sous-module de détermination de liste (331).

8. Dispositif selon l'une quelconque des revendications 5 à 7, **caractérisé en ce que**, le dispositif comprend en outre :
un module de suppression de nom (360) configuré pour supprimer le nom d'hôte du terminal du fichier de configuration DHCP si le terminal est déconnecté du routeur.

9. Programme d'ordinateur, qui lors de l'exécution sur un processeur d'un routeur, effectue un procédé selon l'une quelconque des revendications 1 à 4.

10. Support de stockage lisible par ordinateur non transitoire incluant des instructions pour effectuer un procédé selon l'une quelconque des revendications 1 à 4.
